# EUROPEAN PATENT APPLICATION

(11) **EP 3 434 942 A1**
(43) Date of publication of application: **30.01.2019**
(21) Application number: 17799288.0
(22) Date of filing: 12.05.2017
(51) Int. Cl.: F16J 15/14, F16J 15/06, F16J 15/10

(54) **GASKET FOR PREVENTING CORROSION**

(30) Priority: 17.05.2016 JP 2016099079
(71) Applicant: NOK Corporation, Tokyo 105-8585 (JP)
(72) Inventor: HAMADA, Norihiro, Fujisawa-shi Kanagawa 251-0042 (JP); KODA, Yutaka, Fujisawa-shi Kanagawa 251-0042 (JP); SUZUKI, Kiyohiro, Fujisawa-shi Kanagawa 251-0042 (JP); YU, Nan, Aso-shi Kumamoto 869-2231 (JP)
(74) Representative: Prüfer & Partner mbB Patentanwälte · Rechtsanwälte
(86) International application number: PCT/JP2017/017967
(87) International publication number: WO 2017/199864

(57) **Abstract**

The object of the present invention is to provide a gasket for corrosion prevention, which can exhibit an excellent corrosion protection performance over a long period of time, without changing rubber characteristics of a rubber elastic body itself.

The gasket for corrosion prevention includes a rubber elastic body, and a surface active agent, characterized in that the surface active agent exists at least in an inner part of the rubber elastic body, in an impregnated state in which the surface active agent can exude to a surface of the rubber elastic body.

## Description

### Technical Field

The present invention relates to a gasket for corrosion prevention, which is used for sealing a surface of a metallic member, and can prevent corrosion of a seal surface (contact surface with gasket) of the metallic member.

### Background Art

In vehicles and general purpose machines, for example, in automobiles, gaskets are used in an engine, an apparatus which accommodates electronic parts in its inner part, and the like, so as to seal a housing. The gasket is elastically deformed by being sandwiched in between a pair of members, for example, which form the housing by being combined with each other, in a compressed state, and seals a space between the pair of members to seal the housing.

Automobiles occasionally travel in a coastal area or in an area where a snow melting agent is sprayed. At this time, when salt water and/or the snow melting agent adhere to the parts of the automobiles and there is a crevice between a member that clamps the gasket and the gasket, there is a case where the salt water and/or a component of the snow melting agent infiltrate into and stay in the crevice. Due to the salt water or the component of the snow melting agent which has stayed in the crevice, there is a case where corrosion occurs in the member that clamps the gasket. In particular, in the case where the member that clamps the gasket is, for example, the metallic member such as an aluminum alloy, the metallic member that clamps the gasket tends to be corroded by the above described staying salt water or component of the snow melting agent, due to copper (Cu) and/or silicon (Si) which are contained as an alloy component. When this corroded portion exceeds a sealing line of the gasket, the sealing function of the gasket decreases or disappears.

In Patent Literature 1, a technique is disclosed which applies a water-repellent coating onto the surface of the metallic member, so as to prevent crevice corrosion occurring between the gasket and the metallic member. Such a coating member can exhibit a sufficient corrosion protection performance in an early stage of use, but there are the following problems due to use over a long period of time: the water-repellent coating on the surface of the metallic member tends to be peeled off, and the corrosion protection performance decreases.

On the other hand, in Patent Literature 2, an anticorrosive water-swelling composition is disclosed in which a corrosion inhibitor is blended in a rubber composition, so as to impart a corrosion prevention performance to the gasket side. However, in the method of adding the corrosion inhibitor to the rubber composition, there are problems such as: (1) since the corrosion inhibitor affects a rubber structure, desired rubber characteristics cannot be obtained, and it becomes difficult to adjust, in particular, performances (for example, hardness and sealing properties) other than anticorrosive properties; (2) since the corrosion inhibitor is incorporated and fixed in the rubber structure as a part of the rubber composition, a sufficient corrosion preventing effect is not obtained; and (3) it is necessary to change the design of the rubber composition, and it is difficult to be applied to an existing gasket.

### Document List

### Patent Documents

Patent Literature 1: Japanese Laid-Open Patent Publication No. 7-021682
Patent Literature 2: Japanese Laid-Open Patent Publication No. 3-203940

### Summary of Invention

### Technical Problem

It is an object of the present invention to provide a gasket for corrosion prevention, which can exhibit an excellent corrosion protection performance over a long period of time, particularly without changing rubber characteristics of a rubber elastic body itself.

### Solution to Problem

As a result of having conducted an extensive investigation, the present inventors have found out that it is possible to obtain a gasket which can protect a surface (seal surface in particular) of a metallic member from a corrosive component such as salt water over a long period of time, while having desired rubber characteristics, by causing a surface active agent to exist at least in an inner part of a rubber elastic body in an impregnated state in which the surface active agent can exude to the surface of the rubber elastic body, and on the basis of such a knowledge, have accomplished the present invention.

Specifically, the summary and the constitution of the present invention are as follows.
[1] A gasket for corrosion prevention comprising a rubber elastic body and a surface active agent, characterized in that the surface active agent exists at least in an inner part of the rubber elastic body, in an impregnated state in which the surface active agent can exude to a surface of the rubber elastic body.
[2] The gasket for corrosion prevention according to the above described aspect [1], wherein the rubber elastic body is a cross-linked molded article of a rubber composition containing at least one rubber selected from an ethylene-propylene-diene ternary copolymer rubber (EPDM), a nitrile rubber (NBR) and a hydrogenated nitrile rubber (HNBR).

### Effects of Invention

The gasket for corrosion prevention of the present invention comprises a rubber elastic body and a surface active agent, where the surface active agent exists at least in the inner part of the rubber elastic body, in an impregnated state in which the surface active agent can exude to the surface of the rubber elastic body; thereby has both of the excellent rubber characteristics and the corrosion protection performance; and particularly when having been used for sealing a metallic member, can gradually supply the surface active agent to the surface of the metallic member, protects the surface (seal surface in particular) of the metallic member from the corrosive component such as salt water, and can exhibit an excellent sealing function over a long period of time.

### Description of Embodiments

A gasket for corrosion prevention (hereinafter occasionally referred to simply as "gasket") of the present invention comprises a rubber elastic body and a surface active agent, and is characterized in that the surface active agent exists at least in the inner part of the rubber elastic body in an impregnated state in which the surface active agent can exude to the surface of the rubber elastic body.

Here, the inner part of the rubber elastic body refers to all portions other than the surface, of the rubber elastic body.

In addition, the impregnated state refers to a state in which the surface active agent permeates at least the inner part of the rubber elastic body, in particular, an interstice of a network structure of the rubber elastic body, and is distinguished from a state in which the surface active agent is incorporated into the network structure of the rubber elastic body by a chemical bond, like a rubber elastic body that is obtained from the rubber composition in which the surface active agent is blended. In addition, the impregnated state, regardless of the forming method, includes all embodiments in which the surface active agent permeates at least the inner part of the rubber elastic body.

In addition, the extent of the impregnated state can be appropriately selected from positions between the surface side and the deep part of the rubber elastic body. The surface active agent may permeate the deep part of the rubber elastic body or wholly and uniformly permeates the rubber elastic body, and when the rubber elastic body is a sheet form, for example, the surface active agent may permeate only the inner part of the side corresponding to one surface (surface of side which comes in contact with surface of metallic member).

In addition, the state in which the surface active agent can exude to the surface of the rubber elastic body is not limited in particular, and a state in which when the rubber elastic body is used as the gasket, the surface active agent gradually exudes to the surface of the gasket due to a clamping pressure is preferable, and it may also be a state in which the surface active agent gradually exudes to the surface of the gasket in a normal state (room temperature and normal pressure).

The gasket of the present invention, when sealing the surface of the metallic member (hereinafter occasionally referred to as "metal surface"), can efficiently supply the surface active agent to the metal surface. The metal surface to which the surface active agent has adhered exhibits excellent water repellency. Due to its excellent water repellency, it is difficult for a corrosive component such as salt water to infiltrate into the crevice between the metal surface and the gasket, and to stay in the crevice. Thereby, the gasket can effectively protect the metal surface corresponding to the crevice between the gasket and the metallic member from the corrosion, and can maintain the sealing function of the gasket. In addition, in the case of the gasket of the present invention, the surface active agent is gradually supplied from the gasket side, even when the surface active agent which has adhered to the metal surface is exposed to salt water or the like for a long period of time and thereby dissolves in the salt water and leaves the surface; and accordingly water repellency on the metal surface is not impaired, and a corrosion preventing effect is obtained over a long period of time.

On the other hand, in the case of a gasket which does not comprise the surface active agent, the gasket cannot impart the water repellency to the metal surface. Because of the above reason, the gasket cannot prevent the corrosive component such as salt water from infiltrating into the crevice between the gasket and the metallic member, which causes the corrosion on the metal surface, and the sealing function of the gasket decreases.

In addition, it is important for the gasket of the present invention that the surface active agent exists at least in the inner part of the rubber elastic body in an impregnated state, and is in a state in which the surface active agent can exude to the surface of the rubber elastic body. Specifically, even though the gasket simply comprises the surface active agent, if the surface active agent is blended in the rubber composition and is incorporated in the rubber structure as in Patent Literature 2, it is difficult for the surface active agent to exude to the surface of the rubber elastic body, and it is impossible to impart sufficient water repellency to the metal surface. On the other hand, in the case where a large amount of the surface active agent is blended in the rubber composition so as to increase the amount of the surface active agent which exudes, rubber characteristics (for example, hardness and sealing properties) other than anticorrosion properties of the obtained rubber elastic body tend to decrease. Because of the above reason, it has been difficult by the method for blending the surface active agent in the rubber composition to obtain a gasket which can exhibit a sufficient corrosion preventing effect over a long period of time, while excellently maintaining the rubber characteristics other than anticorrosion properties.

As described above, the gasket of the present invention is characterized in that the surface active agent exists at least in the inner part of the rubber elastic body in an impregnated state in which the surface active agent can exude to the surface of the rubber elastic body. Such a gasket has excellent rubber characteristics, and can exhibit an excellent corrosion preventing effect over a long period of time.

Hereinafter, materials constituting the gasket of the present invention will be individually described.

### (1) Rubber elastic body

The rubber elastic body of the present invention is molded by crosslinking, retains the surface active agent in the interstices of its net structure, and plays a role of gradually supplying the surface active agent to the metal surface when having come in contact with the metallic member.

As such a rubber elastic body, a rubber elastic body made from a known rubber material can be used. As the rubber material, a rubber material having water resistance is preferable, and the examples of the material include a rubber composition containing at least one rubber selected from an ethylene-propylene-diene ternary copolymer rubber (EPDM), a nitrile rubber (NBR) and a hydrogenated nitrile rubber (HNBR). In addition, such a rubber material may contain various additives as needed, and may contain the surface active agent, in a range that does not decrease the rubber characteristics other than the anticorrosion properties.

In addition, it is preferable that the rubber elastic body has excellent water resistance. From such a viewpoint, it is more preferable that the rubber elastic body is a cross-linked molded article of a rubber composition containing at least one rubber selected from the EPDM, the NBR and the HNBR, and it is more preferable that the rubber elastic body is a cross-linked molded article of a rubber composition containing at least one of the EPDM and the HNBR out of the above rubbers.

In addition, the shape of the rubber elastic body (specifically, shape as gasket) is not limited in particular, and can take an arbitrary shape. For example, there are shown a sheet-like gasket such as square-like, rectangle-like and disk-like gaskets, and an annular gasket such as an O-ring and a square ring.

### (2) Surface active agent

The surface active agent of the present invention exists at least in the inner part of the rubber elastic body in an impregnated state in which the surface active agent can exude to the surface of the rubber elastic body; thereby does not change the rubber characteristics of the rubber elastic body itself; and when having come in contact with the metal member, adheres to the metal surface and plays a role of imparting water repellency to the metal surface.

As such surface active agents, lauric acid, myristic acid, palmitic acid, stearic acid, arachidic acid and the like can be suitably used. In addition, as for the surface active agent, only one may be used, or two or more may be used in combination.

It is preferable that when the surface active agent has been caused to adhere to the surface (aluminum surface) of, for example, a plate made from aluminum, the surface active agent can increase a contact angle of water, as compared to the aluminum surface before the adhesion. The contact angle of water means that the larger the contact angle is, the more excellent the water repellency is. Specifically, when the surface active agent is compared on the aluminum surface, the surface active agent which can increase the contact angle of water after the adhesion as compared to that before the adhesion can impart excellent water repellency to the metal surface which contains aluminum.

As described above, the gasket of the present invention, when having been used for sealing the surface of the metallic member, gradually supplies the surface active agent to the contact surface, and thereby can impart excellent water repellency to the surface over a long period of time. Furthermore, in the metal surface to which the water repellency has been imparted, a capillary phenomenon is hard to occur in the crevice with the gasket; and it is possible to effectively prevent the corrosive component such as salt water from infiltrating into the crevice or staying in the crevice, and accordingly it is possible to effectively suppress the corrosion of the metal surface. Such a gasket of the present invention is more suitable for sealing the metallic member which is required particularly to have the corrosion resistance. Such metal members include members made from an aluminum-based material, stainless steel and the like.

In particular, the gasket of the present invention is suitably used for sealing the surface of the metallic member made from the aluminum material (aluminum, or aluminum alloy). In this case, it is preferable that the above described surface active agent can impart excellent water repellency to the metal surface made from the aluminum material.

Thereafter, a preferable method for producing the gasket of the present invention will be described.

The gasket can be produced by causing the surface active agent to permeate the rubber elastic body to form a predetermined impregnated state.

The above described method of forming the impregnated state is not particularly limited, and can be performed by a method of immersing the rubber elastic body in a solution containing the surface active agent, by a method of applying the solution containing the surface active agent and causing the surface active agent to permeate the rubber elastic body by pressurization or the like, and by known treatments similar to the methods. Because of the above reason, the method does not need a large scale facility, and also the treatment is comparatively easy, and is excellent in productivity. Furthermore, the method can use the rubber elastic body which has been molded by using a conventional rubber composition as it is, accordingly is easily applied to an existing gasket, and is excellent in versatility.

Hereinafter, one example of a treatment for forming the predetermined impregnated state will be specifically described.

Firstly, a rubber elastic body having desired rubber characteristics is prepared, and is immersed in a solution containing the surface active agent for a certain period of time. Thereby, the inner part of the rubber elastic body is impregnated with the surface active agent.

A method for preparing a solution containing the surface active agent is not particularly limited, and can be performed according to a known method. For example, the type and the concentration of a solvent may be determined according to the type and the characteristics of the surface active agent to be used, and an additive and the like may be appropriately selected as needed.

The immersion time period may be appropriately adjusted, depending on a desired impregnated state (to what extent it is impregnated from the surface), the type of the surface active agent and the rubber elastic body, the temperature of the solution in which the rubber elastic body is immersed, and the like; and is preferably 30 minutes to 72 hours, and is more preferably 3 hours to 24 hours. If the immersion time period is too short, the surface active agent is hard to be impregnated in the inner part of the rubber elastic body. In addition, because the surface active agent becomes a saturated state after the inner part of the rubber elastic body has become a state of being sufficiently impregnated with the surface active agent, even if the immersion time period is too long, it cannot be expected that the corrosion preventing effect improves, but there is a possibility that the productivity is rather aggravated due to prolongation of the treatment time period, and the deterioration of the rubber characteristics also occurs. Accordingly, it is preferable to appropriately adjust the immersion time period so that the inner part of the rubber elastic body is moderately impregnated with the surface active agent and the productivity and rubber characteristics can be adequately maintained, while considering the balance.

In addition, the rubber elastic body after the immersion treatment may be subjected to treatments such as surface cleaning and drying as needed, in a range that does not affect the surface active agent existing in the inner part in the impregnated state, or further may be stored for a certain period of time. Alternatively, the rubber elastic body after the immersion treatment may be pulled up from the solution containing the surface active agent, drained, and then subjected to an intended use in the state.

The embodiments of the present invention have been described above, but the present invention is not limited to the above described embodiments; includes all modes which are included in the concept and claims of the present invention; and can be variously modified within the scope of the present invention.

### Examples

Thereafter, in order to further clarify the effects of the present invention, Examples and Comparative Examples will be described, but the present invention is not limited to these Examples.

### [Making rubber elastic body]

### (Reference Example 1)

Firstly, 54 parts by weight of carbon black (manufactured by Seast GSO Tokai Carbon Co., Ltd.), 3 parts by weight of a peroxide crosslinking agent (Percumyl (registered trademark) D, manufactured by NOF CORPORATION), 1 part by weight of an antioxidant (manufactured by NOCRAC CD Ouchi Shinko Chemical Industrial Co., Ltd.) were blended into 100 parts by weight of EPDM (Keltan (registered trademark) K2750, manufactured by Lanxess), and these substances were kneaded by a kneader and an oven roll to provide a rubber composition.

Thereafter, the obtained rubber composition was subjected to pressurization crosslinking (primary crosslinking) with the use of an O-ring mold at 180°C for 6 minutes, and oven crosslinking (secondary crosslinking) at 150°C for 4 hours, and was molded into an O-ring specified in JIS B2401-1:2012 P10A; and a rubber elastic body was obtained.

### (Reference Example 2)

In Reference Example 2, the rubber elastic body was obtained in a similar way to that in Reference Example 1, except that when the rubber composition was obtained, 5 parts by weight of lauric acid (manufactured by Tokyo Chemical Industry Co., Ltd.) was further blended, as the surface active agent.

### [Making O-ring (gasket)]

### (Example 1)

Firstly, lauric acid (12 carbon atoms, manufactured by Tokyo Chemical Industry Co., Ltd.) was prepared as the surface active agent, and a surface active agent solution with 5% by mass concentration was obtained with the use of hexane as a solvent, in a resin container.

Thereafter, the rubber elastic body made in Reference Example 1 was immersed in the solution of the above described surface active agent at room temperature for 18 hours, and was pulled up from the solution; the surface was dried; the surface active agent was caused to permeate the resultant rubber elastic body; and an O-ring according to Example 1 was obtained.

### (Example 2)

In Example 2, an O-ring was obtained in a similar way to that in Example 1, except that myristic acid (14 carbon atoms, manufactured by Junsei Chemical Co., Ltd.) was used as the surface active agent.

### (Example 3)

In Example 3, an O-ring was obtained in a similar way to that in Example 1, except that palmitic acid (16 carbon atoms, manufactured by Tokyo Chemical Industry Co., Ltd.) was used as the surface active agent.

### (Example 4)

In Example 4, an O-ring was obtained in a similar way to that in Example 1, except that stearic acid (18 carbon atoms, manufactured by Junsei Chemical Co., Ltd.) was used as the surface active agent.

### (Example 5)

In Example 5, an O-ring was obtained in a similar way to that in Example 1, except that arachidic acid (20 carbon atoms, manufactured by Tokyo Chemical Industry Co., Ltd.) was used as the surface active agent.

### (Comparative Example 1)

In Comparative Example 1, the rubber elastic body made in the above described Reference Example 1 was used in the state as the O-ring.

### (Comparative Example 2)

In Comparative Example 2, the rubber elastic body made in the above described Reference Example 2 was used in the state as the O-ring.

### [Evaluation]

The O-rings according to the above described Examples and Comparative Examples were subjected to the following characteristic evaluations. Evaluation conditions of each characteristic are as follows. The results are shown in Table 1.

### [Salt water corrosion test]

Each of the O-rings according to the above described Examples and Comparative Examples was sandwiched between two aluminum alloy plates (ADC 12; surface roughness Rz, 6.5 µm) and was clamped at a compression ratio of 17%, and a stacked body of the O-ring and the aluminum alloy plates was prepared. Next, sodium chloride was added to water in a resin container so that the concentration becomes 5% by mass, and salt water with a liquid temperature of 50°C was prepared. The above described stacked body was immersed in the salt water for a certain period of time, then the stacked body was pulled up, the stacked body was released, and the corrosion states of the seal surface (contact surface with O-ring) and the sealed surface (inside of O-ring) of the aluminum alloy plate were checked.

All of the O-rings were immersed in the salt water for holding times of 96 hours and 192 hours. In addition, the O-ring of Example 1 was immersed for holding times of 288 hours, 480 hours and 672 hours, and furthermore, the O-rings of Comparative Examples 1 and 2 were immersed for a holding time of 288 hours.

In addition, as for the check of the corrosion states, an aluminum alloy plate in which there is no corrosion in both of the seal surface and the sealed surface was defined as "Good", an aluminum alloy plate in which corrosion was observed in the seal surface was defined as "Fair", and an aluminum alloy plate in which corrosion reached even the sealed surface was defined as "Poor". In the present example, the case in which the corrosion state at the holding time of 192 hours was "Good" was defined as acceptable. The results are shown in Table 1.

**[Table 1]**

| | Surface active agent | | Salt water corrosion test [h] | | | | |
|---|---|---|---|---|---|---|---|
| | Type | Existential state | 96 | 192 | 288 | 480 | 672 |
| Example 1 | Lauric acid | Impregnated | Good | Good | Good | Good | Good |
| Comparative Example 1 | - | | Good | **Poor** | Poor | | |
| Comparative Example 2 | Lauric acid | **In composition** | Good | **Fair** | Poor | | |
| Example 2 | Myristic acid | Impregnated | Good | Good | | | |
| Example 3 | Palmitic acid | Impregnated | Good | Good | | | |
| Example 4 | Stearic acid | Impregnated | Good | Good | | | |
| Example 5 | Arachidic acid | Impregnated | Good | Good | | | |

| | | | | | | | |
|---|---|---|---|---|---|---|---|
| (Note) Underlined bold letters in the table indicate samples outside the appropriate range of the present invention, and samples of which the evaluation results do not reach the acceptance level in this Example. | | | | | | | |

As shown in Table 1, the O-ring of Comparative Example 1, which does not use a surface active agent and is an ordinary O-ring, does not supply the surface active agent to the metal surface. Because of the above reason, it was impossible to protect the metal surface from corrosion, and it was confirmed that the corrosion already reached the sealed surface at the salt water corrosion test of the holding time of 192 hours.

On the other hand, in the O-rings of Examples 1 to 5 according to the present invention, the surface active agent exists at least in the inner part of the rubber elastic body in an impregnated state in which the surface active agent can exude to the surface of the rubber elastic body. Because of the above reason, it was confirmed that the O-ring could gradually supply the surface active agent to the metal surface and could protect the metal surface (seal surface in particular) from corrosion over a long period of time.

On the other hand, in the O-ring of Comparative Example 2, which is made from a rubber elastic body molded with the use of a rubber composition blended with the surface active agent, it cannot be said that the surface active agent exists in the inner part of the rubber elastic body in the impregnated state. Because of the above reason, in such an O-ring, it is impossible to efficiently supply the surface active agent to the metal surface, and sufficiently protect the metal surface from the corrosion. Therefore, it was confirmed that the corrosion already reached the seal surface at the salt water corrosion test of the holding time of 192 hours, and furthermore the corrosion reached even the sealed surface at the holding time of 288 hours.

As for the O-ring of Example 1 according to the present invention, the salt water corrosion test was performed of which the holding time was further extended to 288 hours, 480 hours and 672 hours. As a result, it was confirmed that the corrosion did not occur on the seal surface and the sealed surface under any of the above conditions.

Specifically, it is conceivable that according to the gasket of the present invention, the gasket can gradually supply the surface active agent to the contacted metal surface, and impart high water repellency to the metal surface which has come in contact with the gasket over a long period of time. Because of the above reason, the high water repellency is exhibited in the crevice (seal surface) between the gasket and the metal surface; and the salt water is hard to enter into the crevice and also stay in the crevice. It is conceivable that as a result, the seal surface in particular can be effectively protected from the corrosion, the corrosion does not reach the inside of the seal surface, and the gasket can exhibit an excellent sealing function over a long period of time.

## Claims

1. A gasket for corrosion prevention comprising a rubber elastic body and a surface active agent, **characterized in that**
the surface active agent exists at least in an inner part of the rubber elastic body, in an impregnated state in which the surface active agent can exude to a surface of the rubber elastic body.

2. The gasket for corrosion prevention according to claim 1, wherein
the rubber elastic body is a cross-linked molded article of a rubber composition comprising at least one rubber selected from an ethylene-propylene-diene ternary copolymer rubber (EPDM), a nitrile rubber (NBR) and a hydrogenated nitrile rubber (HNBR).
